# EUROPEAN PATENT APPLICATION

(11) **EP 4 848 855 A1**
(43) Date of publication of application: **02.12.2026**
(21) Application number: 25751122.0
(22) Date of filing: 17.01.2025
(51) Int. Cl.: H04W 72/0446, H04W 72/1268

(54) **RESOURCE CONFIGURATION METHOD AND COMMUNICATION APPARATUS**

(30) Priority: 07.02.2024 CN 202410175909
(71) Applicant: Huawei Technologies Co., Ltd., Shenzhen, Guangdong 518129 (CN)
(72) Inventor: JIAO, Shurong, Shenzhen, Guangdong 518129 (CN); LI, Jun, Shenzhen, Guangdong 518129 (CN); HUA, Meng, Shenzhen, Guangdong 518129 (CN); GAO, Fei, Shenzhen, Guangdong 518129 (CN)
(74) Representative: Huawei European IPR
(86) International application number: PCT/CN2025/072898
(87) International publication number: WO 2025/167520

(57) **Abstract**

This application provides a resource configuration method and a communication apparatus. The method includes: A terminal device receives first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot; and the terminal device uses the target resource to transmit a physical uplink control channel PUCCH. According to the technical solutions of this application, flexibility of resource scheduling of the terminal device can be improved, and signaling overhead can be reduced, thereby ensuring integrity of an SBFD system.

## Description

This application claims priority to Chinese Patent Application No. 202410175909.4, filed with the China National Intellectual Property Administration on February 7, 2024 and entitled "RESOURCE CONFIGURATION METHOD AND COMMUNICATION APPARATUS", which is incorporated herein by reference in its entirety.

### TECHNICAL FIELD

This application relates to the communication field, and more specifically, to a resource configuration method and a communication apparatus.

### BACKGROUND

Data transmission in a new radio (new radio, NR) system includes semi-persistent scheduling (semi-persistent scheduling, SPS) physical downlink shared channel (physical downlink shared channel, PDSCH) transmission. For SPS PDSCH transmission, a base station does not send, in each transmission interval, control signaling to a terminal device to schedule SPS PDSCH transmission. This greatly reduces resource overhead of a physical downlink control channel (physical downlink control channel, PDCCH) carrying the control signaling. The network device sends downlink data to the terminal device via the SPS PDSCH. After receiving the SPS PDSCH, the terminal device performs demodulation and decoding on a data transport block (transport block, TB) carried on the SPS PDSCH, and feeds back corresponding hybrid automatic repeat request (hybrid automatic repeat request acknowledgment, HARQ-ACK) information to the network device. The HARQ-ACK information is usually carried on a physical uplink data channel (physical uplink control channel, PUCCH).

Currently, a PUCCH resource used for carrying the HARQ-ACK information of the SPS PDSCH is configured by the network device for the terminal device by using a higher layer parameter (a (radio resource control, RRC) parameter). However, a configuration for the PUCCH resource used for carrying the HARQ-ACK information of the SPS PDSCH in a subband full-duplex (subband full-duplex, SBFD) system is incomplete. Therefore, a method for configuring the PUCCH resource used for carrying the HARQ-ACK information of the SPS PDSCH in the SBFD system is urgently needed.

### SUMMARY

This application provides a resource configuration method and a communication apparatus, to improve flexibility of resource scheduling, and reduce signaling overhead, thereby ensuring integrity of an SBFD system.

According to a first aspect, a resource configuration method is provided. The method may be performed by a terminal device, or may be performed by a chip, a circuit, or a logical module of the terminal device. This is not limited in this application. For ease of description, the following uses an example in which the method is performed by the terminal device for description.

The method includes: receiving first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot; and using the target resource to transmit a physical uplink control channel PUCCH.

In an example, the maximum payload size carried on the first candidate resource of the first type being different from the maximum payload size carried on the first candidate resource of the second type may be understood as that the first candidate resource of the first type can carry multi-bit information, and the first candidate resource of the second type can carry 1-bit information. Further, there may be a plurality of first candidate resources of the first type, and each first candidate resource of the first type carries a different maximum payload size. There is only one first candidate resource of the second type. For example, a parameter SPS-PUCCH-AN-List-SBFD is used to configure the first candidate resource of the first type, and a parameter n1PUCCH-AN-SBFD is used to configure the first candidate resource of the second type. A maximum of four PUCCH resources can be configured in the parameter SPS-PUCCH-AN-List-SBFD, and a maximum of one PUCCH resource can be configured in the parameter n1PUCCH-AN-SBFD. The parameter n1PUCCH-AN-SBFD and the parameter SPS-PUCCH-AN-List-SBFD are merely used as names of resources configured for an SBFD symbol. This is not limited in this application.

It should be further noted that the capability of the second candidate resource to be used in the SBFD slot and the non-SBFD slot may be understood as that when a slot of the target resource is in the SBFD slot, the target resource may be the second candidate resource, that is, the second candidate resource may be used in both the SBFD slot and the non-SBFD slot.

The terminal device may determine, based on at least one of the candidates of the target resource indicated by the first configuration information, the target resource used for transmitting a PUCCH resource.

According to the foregoing solution, the terminal device uses at least one resource in the candidates of the target resource indicated by the first configuration information to transmit the PUCCH. Because the first candidate resource is a resource dedicated to the SBFD slot, and the second candidate resource is capable of being used in the SBFD slot and the non-SBFD slot, the terminal device determines the target resource based on the candidate of the target resource indicated by the first configuration information. In this way, a PUCCH resource for feedback information in the SBFD slot can be determined, and a PUCCH resource for feedback information in the non-SBFD slot can also be determined. This can improve flexibility of resource scheduling.

With reference to the first aspect, in some implementations of the first aspect, a type of the second candidate resource includes a third type and/or a fourth type, and a maximum payload size carried on the second candidate resource of the third type is different from a maximum payload size carried on the second candidate resource of the fourth type.

It should be noted that the maximum payload size carried on the second candidate resource of the third type is different from the maximum payload size carried on the second candidate resource of the fourth type. Specifically, the second candidate resource of the third type can carry multi-bit information, and the second candidate resource of the fourth type can carry 1-bit information. Further, there may be a plurality of second candidate resources of the third type, and each second candidate resource of the third type carries a different maximum payload size. There is only one second candidate resource of the fourth type. For example, a parameter SPS-PUCCH-AN-List is used to configure the second candidate resource of the third type, and a parameter n1PUCCH-AN is used to configure the second candidate resource of the fourth type. A maximum of four PUCCH resources can be configured in the parameter SPS-PUCCH-AN-List, and a maximum of one PUCCH resource can be configured in the parameter n1PUCCH-AN.

According to the foregoing solution, the terminal device uses at least one resource in the candidates of the target resource indicated by the first configuration information to transmit the PUCCH. Because the first candidate resource is a resource dedicated to the SBFD slot, and the second candidate resource is capable of being used in the SBFD slot and the non-SBFD slot, based on the target resource indicated by the first configuration information, the terminal device can determine a PUCCH resource for feedback information in the SBFD slot, and can also determine a PUCCH resource for feedback information in the non-SBFD slot. In this way, flexibility of resource scheduling can be improved.

With reference to the first aspect, in some implementations of the first aspect, when the first configuration information does not indicate the first candidate resource, the target resource is the second candidate resource.

That the first configuration information does not indicate the first candidate resource, and the target resource is the second candidate resource may be understood as follows: The first configuration information indicates the second candidate resource, and the second candidate resource is capable of being used in the SBFD slot and the non-SBFD slot. Therefore, the target resource for PUCCH transmission is the second candidate resource.

According to the foregoing solution, because the first configuration information does not indicate the first candidate resource, but indicates the second candidate resource, the terminal device may use a resource in the second candidate resource to transmit the PUCCH. In other words, when the first configuration information indicates only one type of candidate resource, the terminal device can also determine the target resource for PUCCH transmission. In this way, signaling overhead can be reduced.

With reference to the first aspect, in some implementations of the first aspect, when a slot of the target resource is in the SBFD slot, and at least one resource indicated by the first configuration information includes the first candidate resource, the target resource is the first candidate resource; or
when a slot of the target resource is in the SBFD slot, at least one resource indicated by the first configuration information does not include the first candidate resource, and the at least one resource indicated by the first configuration information includes the second candidate resource, the target resource is the second candidate resource.

For example, when the first configuration information indicates the first candidate resource and the second candidate resource, the terminal device preferentially uses the first candidate resource dedicated to the SBFD slot to transmit the PUCCH, or preferentially uses the second candidate resource that is capable of being used in the non-SBFD slot, to transmit the PUCCH. For example, if the slot of the target resource is in the SBFD slot, the terminal device uses a resource in the first candidate resource (for example, n1PUCCH-AN-SBFD or SPS-PUCCH-AN-List-SBFD) to transmit the PUCCH, that is, the target resource is the first candidate resource. For another example, if the slot of the target resource is in the non-SBFD slot, the terminal device can use a resource in the second candidate resource (for example, n1PUCCH-AN or SPS-PUCCH-AN-List) to transmit the PUCCH, that is, the target resource is the second candidate resource.

For example, when the first configuration information indicates the second candidate resource, but does not indicate the first candidate resource, the terminal device may use a resource in the second candidate resource to transmit the PUCCH. For example, when the slot of the target resource is in the SBFD slot, and the at least one resource indicated by the first configuration information does not include the first candidate resource (for example, does not include n1PUCCH-AN-SBFD or SPS-PUCCH-AN-List-SBFD), but includes the second candidate resource (for example, n1PUCCH-AN and/or SPS-PUCCH-AN-List), the terminal device uses the resource in the second candidate resource to transmit the PUCCH, that is, the target resource is the second candidate resource.

According to the foregoing solution, when the slot of the target resource is in the SBFD slot, and the first configuration information indicates the first candidate resource, the terminal device uses the resource in the first candidate resource to transmit the PUCCH; or when the first configuration information does not indicate the first candidate resource, but indicates the second candidate resource, the terminal device may use the resource in the second candidate resource to transmit the PUCCH. Therefore, even if a network device does not configure a resource for feedback information in the SBFD slot, the terminal device may still use a resource for feedback information in the non-SBFD slot to transmit the PUCCH. In this way, flexibility of resource scheduling can be improved. In addition, the first configuration information indicates only one of the first candidate resource and the second candidate resource. Therefore, signaling overhead can be reduced, thereby ensuring integrity of an SBFD system.

With reference to the first aspect, in some implementations of the first aspect, the maximum payload size carried on the first candidate resource of the first type is different from the maximum payload size carried on the second candidate resource of the third type.

Optionally, a maximum payload size carried on a resource in the first candidate resource of the first type and a maximum payload size carried on a resource in the second candidate resource of the third type are independently configured. In other words, the maximum payload size carried on the resource in the first candidate resource of the first type and the maximum payload size carried on the resource in the second candidate resource of the third type may be different or may be the same. This is not limited in this application.

Optionally, a maximum payload size carried on a resource in the first candidate resource of the first type and a maximum payload size carried on a resource in the second candidate resource of the third type are independently configured. In other words, there are N resources in the first candidate resource of the first type, and there are M resources in the second candidate resource of the third type. N and M are positive integers. N and M may be different or may be the same. For example, a maximum payload size carried on an *i*^{th} resource in the first candidate resource of the first type and a maximum payload size carried on an *i*^{th} resource in the second candidate resource of the third type are independently configured, and the two maximum payload sizes may be different or may be the same, where *i* is a positive integer, and *i* is less than or equal to min(N, M).

According to the foregoing solution, the resource in the first candidate resource of the first type and the resource in the second candidate resource of the third type are different. Based on the candidate of the target resource indicated by the first configuration information, the terminal device determines the target resource, can determine a PUCCH resource for feedback information in the SBFD slot, and can also determine a PUCCH resource for feedback information in the non-SBFD slot. In this way, flexibility of resource scheduling can be improved, thereby ensuring integrity of an SBFD system.

With reference to the first aspect, in some implementations of the first aspect, the first configuration information specifically includes a configuration of the second candidate resource and frequency domain offset information, and the frequency domain offset information indicates a frequency domain offset of the first candidate resource relative to the second candidate resource.

It should be noted that the frequency domain offset information includes one or more frequency domain offsets. When the first configuration information includes the configuration of the second candidate resource and the frequency domain offset information, the first candidate resource can be determined by adding the frequency domain offset (where the frequency domain offset may be positive or negative) to a frequency domain position of a resource in the second candidate resource.

With reference to the first aspect, in some implementations of the first aspect, the frequency domain offset is independently configured for a specific cell;
the frequency domain offset is independently configured for a specific carrier; or
the frequency domain offset is independently configured for a specific bandwidth part BWP.

With reference to the first aspect, in some implementations of the first aspect, the PUCCH includes a plurality of candidate formats, and different candidate formats may correspond to different frequency domain offsets.

According to the foregoing solution, when the first configuration information includes the configuration of the second candidate resource and the frequency domain offset information, but does not include a configuration of the first candidate resource, the terminal device can determine the first candidate resource based on the second candidate resource by using the frequency domain offset information. In other words, a frequency domain position of a resource in the first candidate resource is different from a frequency domain position of a resource in the second candidate resource. Therefore, when the first configuration information does not indicate the first candidate resource, the target resource for PUCCH transmission in the SBFD slot may be determined based on the configuration of the second candidate resource and the frequency domain offset information that are included in the first configuration information. In this way, flexibility of resource scheduling can be improved, and signaling overhead can be reduced, thereby ensuring integrity of an SBFD system.

According to a second aspect, a resource configuration method is provided. The method may be performed by a network device, or may be performed by a chip, a circuit, or a logical module of the network device. This is not limited in this application. For ease of description, the following uses an example in which the method is performed by the network device for description.

The method includes: sending first configuration information, where the first configuration information indicates at least one of candidates of a target resource, the candidates of the target resource include a first candidate resource and a second candidate resource, and a type of the first candidate resource includes a first type and/or a second type; and a maximum payload size carried on the first candidate resource of the first type is different from a maximum payload size carried on the first candidate resource of the second type, the first candidate resource is a resource dedicated to a subband full-duplex SBFD slot, the second candidate resource is capable of being used in the SBFD slot and a non-SBFD slot; and receiving a physical uplink control channel PUCCH on the target resource.

It should be noted that the difference between the maximum payload size carried on the first candidate resource of the first type and the maximum payload size carried on the first candidate resource of the second type may be understood as that the first candidate resource of the first type can carry multi-bit information, and the first candidate resource of the second type can carry 1-bit information. Further, there may be a plurality of first candidate resources of the first type, and each first candidate resource of the first type carries a different maximum payload size. There is only one first candidate resource of the second type. For example, a parameter SPS-PUCCH-AN-List-SBFD is used to configure the first candidate resource of the first type, and a parameter n1PUCCH-AN-SBFD is used to configure the first candidate resource of the second type. A maximum of four PUCCH resources can be configured in the parameter SPS-PUCCH-AN-List-SBFD, and a maximum of one PUCCH resource can be configured in the parameter n1PUCCH-AN-SBFD. The parameter n1PUCCH-AN-SBFD and the parameter SPS-PUCCH-AN-List-SBFD are merely used as names of resources configured for an SBFD symbol. This is not limited in this application.

It should be further noted that the capability of the second candidate resource to be used in the SBFD slot and the non-SBFD slot may be understood as that when a slot of the target resource is in the SBFD slot, the target resource may be the second candidate resource, that is, the second candidate resource may be used in both the SBFD slot and the non-SBFD slot.

According to the foregoing solution, the first configuration information sent by the network device can indicate at least one resource in the candidates of the target resource, and the candidates of the target resource include the first candidate resource dedicated to the SBFD slot and the second candidate resource that is capable of being used in the SBFD slot and the non-SBFD slot. Therefore, the network device can flexibly configure a candidate of the target resource for PUCCH transmission, so that a terminal device determines the target resource based on the candidate of the target resource indicated by the first configuration information, can determine a PUCCH resource for feedback information in the SBFD slot, and can also determine a PUCCH resource for feedback information in the non-SBFD slot. In this way, flexibility of resource scheduling can be improved.

With reference to the second aspect, in some implementations of the second aspect, a type of the second candidate resource includes a third type and/or a fourth type, and a maximum payload size carried on the second candidate resource of the third type is different from a maximum payload size carried on the second candidate resource of the fourth type.

It should be noted that the maximum payload size carried on the second candidate resource of the third type is different from the maximum payload size carried on the second candidate resource of the fourth type. Specifically, the second candidate resource of the third type can carry multi-bit information, and the second candidate resource of the fourth type can carry 1-bit information. Further, there may be a plurality of second candidate resources of the third type, and each second candidate resource of the third type carries a different maximum payload size. There is only one second candidate resource of the fourth type. For example, a parameter SPS-PUCCH-AN-List is used to configure the second candidate resource of the third type, and a parameter n1PUCCH-AN is used to configure the second candidate resource of the fourth type. A maximum of four PUCCH resources can be configured in the parameter SPS-PUCCH-AN-List, and a maximum of one PUCCH resource can be configured in the parameter n1PUCCH-AN.

According to the foregoing solution, the first configuration information sent by the network device can indicate at least one resource in the candidates of the target resource, and the candidates of the target resource include the first candidate resource dedicated to the SBFD slot and the second candidate resource that is capable of being used in the SBFD slot and the non-SBFD slot. Therefore, the network device can flexibly configure a candidate of the target resource for PUCCH transmission, so that a terminal device determines the target resource based on the candidate of the target resource indicated by the first configuration information, can determine a PUCCH resource for feedback information in the SBFD slot, and can also determine a PUCCH resource for feedback information in the non-SBFD slot. In this way, flexibility of resource scheduling can be improved.

With reference to the second aspect, in some implementations of the second aspect, when the first configuration information does not indicate the first candidate resource, the target resource is the second candidate resource.

According to the foregoing solution, because the first configuration information sent by the network device does not indicate the first candidate resource, but indicates the second candidate resource, the terminal device may use a resource in the second candidate resource to transmit the PUCCH. In other words, when the first configuration information indicates only one type of candidate resource, a terminal device may also determine the target resource for PUCCH transmission. In this way, signaling overhead can be reduced.

With reference to the second aspect, in some implementations of the second aspect, when a slot of the target resource is in the SBFD slot, and at least one resource indicated by the first configuration information includes the first candidate resource, the target resource is the first candidate resource; or
when a slot of the target resource is in the SBFD slot, at least one resource indicated by the first configuration information does not include the first candidate resource, and the at least one resource indicated by the first configuration information includes the second candidate resource, the target resource is the second candidate resource.

According to the foregoing solution, when the slot of the target resource is in the SBFD slot, because the first configuration information sent by the network device indicates the first candidate resource, a terminal device can use a resource in the first candidate resource to transmit the PUCCH; or when the first configuration information sent by the network device does not indicate the first candidate resource, but indicates the second candidate resource, the terminal device may use a resource in the second candidate resource to transmit the PUCCH. Therefore, even if the network device does not configure a resource for feedback information in the SBFD slot, the terminal device may still use a resource for feedback information in the non-SBFD slot to transmit the PUCCH. In this way, flexibility of resource scheduling can be improved. In addition, the first configuration information indicates only one of the first candidate resource and the second candidate resource. Therefore, signaling overhead can be reduced, thereby ensuring integrity of an SBFD system.

With reference to the second aspect, in some implementations of the second aspect, the maximum payload size carried on the first candidate resource of the first type is different from the maximum payload size carried on the second candidate resource of the third type.

According to the foregoing solution, a resource in the first candidate resource of the first type and a resource in the second candidate resource of the third type that are indicated by the first configuration information sent by the network device are different. Based on the target resource indicated by the first configuration information, the terminal device can determine a PUCCH resource for feedback information in the SBFD slot, and can also determine a PUCCH resource for feedback information in the non-SBFD slot. In this way, flexibility of resource scheduling can be improved, thereby ensuring integrity of an SBFD system.

With reference to the second aspect, in some implementations of the second aspect, the first configuration information specifically includes a configuration of the second candidate resource and frequency domain offset information, and the frequency domain offset information indicates a frequency domain offset of the first candidate resource relative to the second candidate resource.

With reference to the second aspect, in some implementations of the second aspect, the frequency domain offset is independently configured for a specific cell;
the frequency domain offset is independently configured for a specific carrier; or
the frequency domain offset is independently configured for a specific bandwidth part BWP.

With reference to the second aspect, in some implementations of the second aspect, the PUCCH includes a plurality of candidate formats, and different candidate formats correspond to different frequency domain offsets.

According to the foregoing solution, when the first configuration information sent by the network device includes configuration information of the second candidate resource and the frequency domain offset information, and the first configuration information does not directly include configuration information of the first candidate resource, the terminal device can determine the first candidate resource based on the second candidate resource by using the frequency domain offset information. In other words, a frequency domain position of a resource in the first candidate resource is different from a frequency domain position of a resource in the second candidate resource. Therefore, when the first configuration information does not indicate the first candidate resource, the target resource for PUCCH transmission in the SBFD slot may be determined based on the second candidate resource and the frequency domain offset information that are included in the first configuration information. In this way, flexibility of resource scheduling can be improved, and signaling overhead can be reduced, thereby ensuring integrity of an SBFD system.

According to a third aspect, a communication apparatus is provided. The communication apparatus includes a transceiver unit, configured to receive first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in an SBFD slot and a non-SBFD slot.

Optionally, the transceiver unit is further configured to use the target resource to transmit a physical uplink control channel PUCCH.

The transceiver unit may perform receiving and sending processing in the first aspect and the possible implementations of the first aspect. Optionally, the apparatus further includes a processing unit. The processing unit may perform processing other than the receiving and sending processing in the first aspect and the possible implementations of the first aspect.

According to a fourth aspect, a communication apparatus is provided. The communication apparatus includes a transceiver unit, configured to send first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in an SBFD slot and a non-SBFD slot.

Optionally, the transceiver unit is further configured to receive a physical uplink control channel PUCCH on the target resource.

The transceiver unit may perform receiving and sending processing in the second aspect and the possible implementations of the second aspect. Optionally, the apparatus further includes a processing unit. The processing unit may perform processing other than the receiving and sending processing in the second aspect and the possible implementations of the second aspect.

According to a fifth aspect, a communication apparatus is provided, including a processor. The processor is configured to execute a computer program, to cause the apparatus to perform the method according to any one of the first aspect and the second aspect and the possible implementations thereof.

Optionally, there are one or more processors.

Optionally, the communication apparatus further includes a memory, the memory is configured to store the computer program, and there are one or more memories.

Optionally, the memory may be integrated with the processor, the memory and the processor are separately disposed, or the memory is located in the processor.

Optionally, the communication apparatus further includes a transceiver circuit, for example, a transceiver or an input/output circuit.

According to a sixth aspect, a communication system is provided, including a network device and a terminal device. The terminal device is configured to perform the method in the possible implementations of the first aspect, and the network device is configured to perform the method in the possible implementations of the second aspect.

According to a seventh aspect, a computer-readable storage medium is provided. The computer-readable storage medium stores a computer program or code. When the computer program or the code is run on a computer, the computer is caused to perform the method according to any one of the first aspect and the second aspect and the possible implementations thereof.

According to an eighth aspect, a chip (or a chip system) is provided, including at least one processor. The processor is configured to run a computer program, to cause an apparatus in which the chip is installed to perform the method according to any one of the first aspect and the second aspect and the possible implementations thereof.

The chip may include an output circuit or interface configured to send information or data and an input circuit or interface configured to receive information or data.

According to a ninth aspect, a computer program product is provided. The computer program product includes computer program code. When the computer program code is run on a computer, the method according to any one of the first aspect and the second aspect and the possible implementations thereof is performed.

### BRIEF DESCRIPTION OF DRAWINGS

FIG. 1 is a diagram of a communication system applicable to an embodiment of this application;
FIG. 2 is a diagram of a structure of time-frequency domain resources in frequency division duplex FDD;
FIG. 3 is a diagram of a structure of time-frequency domain resources in time division duplex TDD;
FIG. 4 is a diagram of a structure of time-frequency domain resources in subband full-duplex SBFD;
FIG. 5 is a schematic flowchart of a communication method according to an embodiment of this application;
FIG. 6 is a diagram of a configuration of a frequency domain offset according to an embodiment of this application;
FIG. 7 is a schematic flowchart of a communication method according to an embodiment of this application;
FIG. 8 is a schematic flowchart of a communication method according to an embodiment of this application;
FIG. 9 is a diagram of a structure of a communication apparatus according to an embodiment of this application;
FIG. 10 is a diagram of a structure of another communication apparatus according to an embodiment of this application; and
FIG. 11 is a diagram of a structure of still another communication apparatus according to an embodiment of this application.

### DESCRIPTION OF EMBODIMENTS

The following describes technical solutions of this application with reference to accompanying drawings.

The technical solutions provided in this application may be applied to various communication systems, for example, a 5th generation (5th generation, 5G) or new radio (new radio, NR) system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, for example, a 6th generation mobile communication system, or a converged system of a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

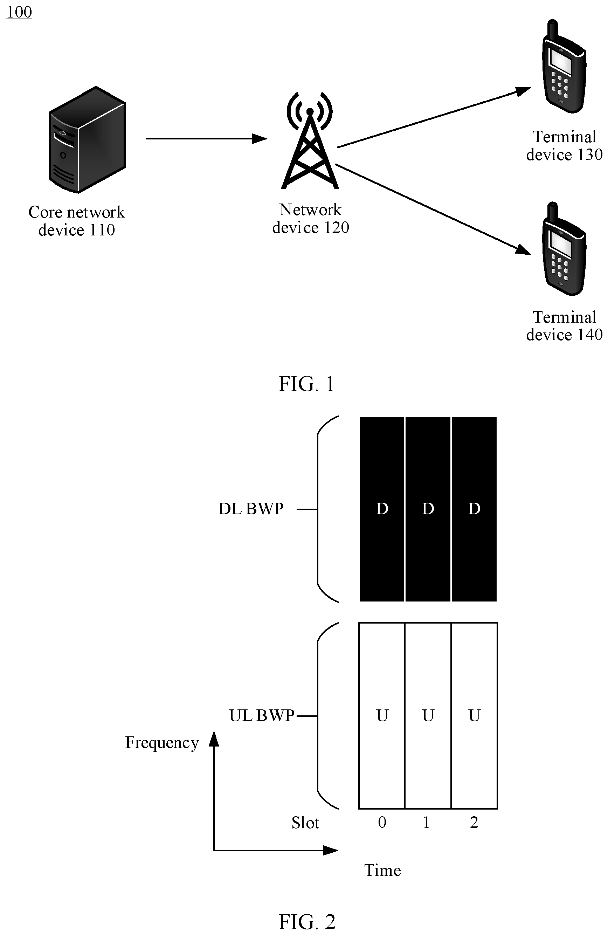

FIG. 1 is a diagram of a communication system 100 applicable to an embodiment of this application. As shown in FIG. 1, the communication system includes a core network device 110, a radio access network device 120, and at least one terminal device (for example, a terminal device 130 and a terminal device 140 in FIG. 1). The terminal device is connected to the radio access network device in a wireless manner, and the radio access network device is connected to the core network device in a wireless or wired manner. The core network device and the radio access network device may be independent and different physical devices, functions of the core network device and logical functions of the radio access network device may be integrated into a same physical device, or some functions of the core network device and some functions of the radio access network device may be integrated into one physical device. The terminal device may be located at a fixed position, or may be mobile. FIG. 1 is merely a diagram. The communication system may further include other network devices, such as a wireless relay device and a wireless backhaul device, which are not shown in FIG. 1. Quantities of core network devices, radio access network devices, and terminal devices included in the mobile communication system are not limited in this embodiment of this application.

The terminal device in embodiments of this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data for a user, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device, another processing device connected to a wireless modem, a wearable device, a terminal device in a 5G network, a terminal device in a future evolved public land mobile communication network (public land mobile network, PLMN), or the like. This is not limited in embodiments of this application.

As an example instead of a limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device, namely, a terminal apparatus, may be a terminal device, or may be an apparatus that can support the terminal device in implementing the function, for example, a chip system or a chip. The apparatus may be installed in the terminal device. In this embodiment of this application, the chip system may include a chip, or may include a chip and another discrete component.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, or the like, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device mentioned in embodiments of this application may be a device including a CU or a DU or including a CU and a DU, or a device including a CU control plane (a central unit-control plane (central unit-control plane, CU-CP)) node, a CU user plane (a central unit-user plane (central unit-user plane, CU-UP)) node, and a DU node.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system or a chip. The apparatus may be installed in the network device. In this embodiment of this application, the chip system may include a chip, or may include a chip and another discrete component.

The network device and the terminal device may be deployed on land, including an indoor or outdoor device, a handheld device, or a vehicle-mounted device; may be deployed on water; or may be deployed on an airplane, a balloon, and a satellite in the air. Scenarios in which the network device and the terminal device are located are not limited in embodiments of this application.

Communication between the radio access network device and the terminal device and communication between terminal devices may be performed by using a licensed spectrum (licensed spectrum), may be performed by using an unlicensed spectrum (unlicensed spectrum), or may be performed by using both of a licensed spectrum and an unlicensed spectrum. A spectrum below 6G, a spectrum above 6G, or both of a spectrum below 6G and a spectrum above 6G may be used for communication between the radio access network device and the terminal device and communication between terminal devices. Spectrum resources used by the radio access network device and the terminal device are not limited in embodiments of this application.

In this application, the network device sends a downlink signal or downlink information to the terminal device, where the downlink information is carried on a downlink channel; and the terminal device sends an uplink signal or uplink information to the network device, where the uplink information is carried on an uplink channel.

For ease of understanding of embodiments of this application, concepts and related technologies in this application are described first.

### (1) Physical uplink control channel PUCCH

A physical uplink control channel PUCCH is used for carrying uplink control information (uplink control information, UCI) and feeding back HARQ-ACK information to indicate whether downlink transport blocks are correctly received. In PUCCH transmission, semi-static allocation and dynamic resource allocation are supported. Semi-static resource allocation refers to directly configuring one or more PUCCH resources via higher layer RRC signaling. When a plurality of PUCCH resources are configured, a terminal device finds a determined PUCCH resource from the plurality of PUCCH resources based on a quantity of bits of HARQ-ACK information that needs to be fed back. Dynamic resource allocation refers to configuring one or more PUCCH resource sets via higher layer RRC signaling, where each resource set includes a plurality of PUCCH resources. After receiving downlink scheduling information, the terminal device finds a determined PUCCH resource set from a plurality of PUCCH resource sets based on a quantity of bits of HARQ-ACK information that needs to be fed back, and finds a determined PUCCH resource in the PUCCH resource set based on a PUCCH resource indicator (PUCCH resource indicator, PRI) in downlink control information (downlink control information, DCI).

### (2) Semi-persistent scheduling SPS transmission

Data transmission in NR is classified into uplink transmission (sending by a terminal device and receiving by a network device) and downlink transmission (sending by the network device and receiving by the terminal device) from a perspective of transmission directions, and is classified into dynamic scheduling and pre-allocation from a perspective of scheduling manners.

It should be noted that dynamic scheduling means that the network device delivers DCI, and the DCI carries scheduling information (including time-frequency resource allocation, a modulation and coding scheme, a transport block size, and the like for data transmission). Pre-allocation is a manner that can be used when the network device performs allocation via higher layer signaling (for example, RRC signaling or a MAC control element (MAC control element, MAC CE)), or a manner that can be used when the network device performs allocation via higher layer signaling and activates the allocation by using DCI. Pre-allocation may also be referred to as a configured grant (configured grant) or scheduling without a grant (scheduling without a grant). In a pre-allocation scheduling manner, pre-allocation usually corresponds to periodic data transmission, to be specific, a periodic time-frequency resource, a modulation and coding scheme, a transport block size, and other information remain unchanged.

The pre-allocation scheduling manner for downlink transmission in the foregoing classification, that is, SPS PDSCH transmission in the NR system, is a transmission method independent of dynamic scheduling. SPS transmission has a feature of "one-time allocation and multiple-time use", and control signaling does not need to be sent to the terminal device in each transmission interval, thereby greatly reducing overhead of a corresponding PDCCH. The network configures downlink SPS transmission for the terminal device via higher layer signaling (for example, RRC signaling) based on an SPS configuration (for example, SPS-Config). The SPS configuration includes a periodicity of a downlink (downlink, DL) SPS PDSCH, a quantity of HARQ processes configured for the DL SPS PDSCH, a modulation and coding scheme table used by the terminal device for downlink DL SPS, a PUCCH resource used for HARQ feedback of DL SPS, and the like. Downlink SPS may be configured in either a special cell (special cell, SpCell) or a secondary cell (secondary cell, SCell).

After configuring DL SPS for the terminal device, the network device needs to activate DL SPS transmission through a PDCCH whose cyclic redundancy check (cyclic redundancy check, CRC) is scrambled by using a configured scheduling-radio network temporary identifier (configured scheduling-radio network temporary identifier, CS-RNTI). The CS-RNTI is an ID of the terminal device used for downlink SPS scheduling. The PDCCH that activates SPS transmission carries some important information about data transmission, for example, time-frequency resource allocation and other parameters. Once the PDCCH activates downlink SPS transmission, the terminal device periodically receives, based on an RRC configuration, downlink data on a time-frequency resource indicated by the PDCCH that activates DL SPS transmission, and feeds back HARQ-ACK information for the received downlink data. Information about a time interval between a slot used for feeding back the HARQ-ACK information and a slot in which the corresponding downlink data is located is carried in activation DCI.

### (3) Frequency division duplex (frequency division duplex, FDD)

FIG. 2 is a diagram of a structure of time-frequency domain resources in frequency division duplex FDD. As shown in FIG. 2, in FDD, a time domain includes three slots: slots 0, 1, and 2, and each slot includes an uplink (uplink, UL) bandwidth part (bandwidth part, BWP) and a DL BWP. However, in different slots, the DL BWP and the UL BWP are located on different carriers, and occupy different frequency domain positions. For example, in the slot 0, the DL BWP and the UL BWP are located on different carriers, and a terminal device may perform downlink transmission on the DL bandwidth part and may also perform uplink transmission on the UL BWP in the slot 0.

### (4) Time division duplex (time division duplex, TDD)

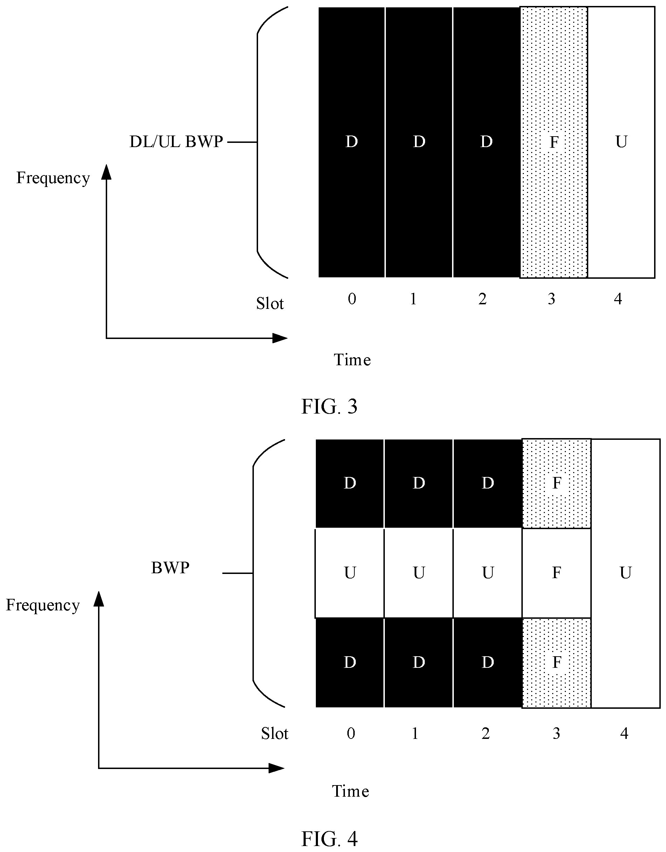

FIG. 3 is a diagram of a structure of time-frequency domain resources in time division duplex TDD. As shown in FIG. 3, in TDD, a time domain includes five slots: slots 0, 1, 2, 3, and 4. A DL BWP and a UL BWP have a same center frequency, and bandwidths of the DL BWP and the UL BWP may be the same or may be different. A terminal device may work only on the UL BWP or the DL BWP on each symbol. In other words, at a same time point, the terminal device can perform only uplink transmission or downlink transmission. For example, the terminal device can perform only downlink transmission in the slot 0, and can perform only uplink transmission in the slot 4. The slot 3 is a flexible slot, and may be used for uplink transmission or downlink transmission. However, uplink transmission and downlink transmission cannot be performed simultaneously. A minimum granularity of switching between uplink transmission and downlink transmission is a symbol. For example, the slot 3 is a flexible slot, and includes 14 or 12 OFDM symbols. The first M symbols are downlink symbols, the last N symbols are uplink symbols, the middle 14-M-N (or 12-M-N) symbols are flexible symbols, where 0 ≤ M ≤ 14, 0 ≤ N ≤ 14, and M + N ≤ 14. The downlink symbols are used for downlink transmission, the uplink symbols are used for uplink transmission, and the flexible symbols may be used for both uplink transmission and downlink transmission. A specific transmission direction is notified by a network device to the terminal device via RRC signaling or DCI scheduling.

In comparison with frequency domain resources in FDD in FIG. 2, fewer frequency domain resources are occupied in TDD. However, in TDD, uplink transmission and downlink transmission cannot be performed simultaneously. For example, in the slot 0, only downlink transmission can be performed, and uplink transmission cannot be performed, resulting in an increase in an uplink transmission delay.

### (5) Subband full-duplex SBFD

FIG. 4 is a diagram of a structure of time-frequency domain resources in subband full-duplex SBFD. Subband full-duplex SBFD allows uplink transmission resources and downlink transmission resources to be configured simultaneously on a symbol or in a slot in a TDD system. As shown in FIG. 4, both the uplink transmission resources and the downlink transmission resources may exist in one slot. For example, in a slot 0, there is a segment of frequency domain resources in a DL BWP, and uplink transmission may be performed on the frequency domain resources. In this way, uplink transmission may be performed in the slot 0, and an uplink transmission delay is reduced. The segment of frequency domain resources may also be referred to as an uplink subband. In this case, downlink transmission may also be performed in the slot 0. In other words, a network device may simultaneously perform uplink transmission and downlink transmission in the slot 0. A terminal device may also simultaneously perform uplink transmission and downlink transmission in the slot 0 (where the terminal device is a full-duplex terminal device). In addition, the terminal device may perform only uplink transmission or downlink transmission (where the terminal device is a half-duplex terminal device). In comparison with frequency domain resources of uplink resources in TDD in FIG. 3, uplink resources in SBFD increase. Therefore, uplink coverage may be increased, and an uplink transmission delay can be reduced.

### (6) Hybrid automatic repeat request acknowledgment HARQ-ACK

A HARQ may be an acknowledgment (acknowledgment, ACK) or a negative acknowledgment (negative acknowledgment, NACK). In an NR system, a network device sends a physical downlink data channel PDSCH to a terminal device by including downlink data in the PDSCH. After receiving the PDSCH, the terminal device performs demodulation and decoding on a data transport block TB carried on the PDSCH, and feeds back corresponding HARQ-ACK information to the network device. If the decoding succeeds, the ACK is fed back. If the decoding fails, the NACK is fed back.

For a same uplink feedback slot, HARQ-ACK information of one or more PDSCHs is combined for feedback. Specifically, if the one or more PDSCHs include a PDSCH dynamically scheduled by using DCI, a PUCCH resource used for carrying the HARQ-ACK information is indicated in the DCI. If the one or more PDSCHs are all SPS PDSCHs, a PUCCH resource used for carrying the HARQ-ACK information may be configured by the network device for the terminal device in advance by using a higher layer parameter (an RRC parameter).

A specific configuration manner of the PUCCH resource used for carrying the HARQ-ACK information of the SPS PDSCH is as follows.

In an example, when one SPS configuration is supported, HARQ-ACK information, with a maximum of 1 bit, of the SPS PDSCH is fed back in each slot. In this case, only one PUCCH resource, that is, n1PUCCH-AN, needs to be configured, and is configured in SPS-Config in each BWP.

In another example, when a plurality of SPS configurations are supported, HARQ-ACK information, with a plurality of bits, of the SPS PDSCH may be fed back in each slot. Therefore, SPS-PUCCH-AN-List is configured in a PUCCH configuration (for example, PUCCH-Config) of each BWP. A maximum of four PUCCH resources can be configured in SPS-PUCCH-AN-List, and the terminal device selects a resource based on a quantity of bits of HARQ-ACK information that needs to be fed back. In the list, each PUCCH resource supports a different maximum payload size.

Currently, parameter configuration rules are shown in Table 1. When SPS-PUCCH-AN-List is configured, the terminal device ignores configured n1PUCCH-AN and uses SPS-PUCCH-AN-List. When the plurality of SPS configurations are configured, if HARQ-ACK information of different SPS PDSCHs is not fed back on a same PUCCH, the network device may configure only n1PUCCH-AN, and the terminal device feeds back the HARQ-ACK of the SPS PDSCHs by using n1PUCCH-AN. When neither n1PUCCH-AN nor SPS-PUCCH-AN-List is configured, the terminal device considers that a configuration error occurs, and therefore, does not feed back the HARQ-ACK information of the SPS PDSCH.

**Table 1**

| n1PUCCH-AN | SPS-PUCCH-AN-List | Used resource |
|---|---|---|
| Y | Y | SPS-PUCCH-AN-List |
| Y | N | n1PUCCH-AN |
| N | Y | SPS-PUCCH-AN-List |
| N | N | Error case |

A frequency domain range of an uplink resource in an SBFD slot (or on an SBFD symbol) is different from a frequency domain range of an uplink resource in a non-SBFD slot (or on a non-SBFD symbol). For example, the frequency domain range of the uplink resource in the non-SBFD slot is greater than the frequency domain range of the uplink resource in the SBFD slot. When the network device configures a PUCCH resource for carrying the feedback information of the SPS PDSCH, flexibility of resource scheduling cannot be ensured due to limitations of the frequency domain range of the uplink resource in the SBFD slot and the frequency domain range of the uplink resource in the non-SBFD slot.

In view of this, this application provides a resource configuration method and a communication apparatus. A network device sends first configuration information to a terminal device, and uses at least one of candidates of a target resource indicated by the first configuration information to transmit a PUCCH. The candidates of the target resource include a first candidate resource and a second candidate resource, where the first candidate resource is a resource dedicated to a subband full-duplex SBFD slot, and the second candidate resource is capable of being used in the SBFD slot and a non-SBFD slot. Therefore, based on the target resource indicated by the first configuration information, the terminal device can determine a PUCCH resource for feedback information in the SBFD slot, and can also determine a PUCCH resource for feedback information in the non-SBFD slot. In this way, flexibility of resource scheduling can be improved.

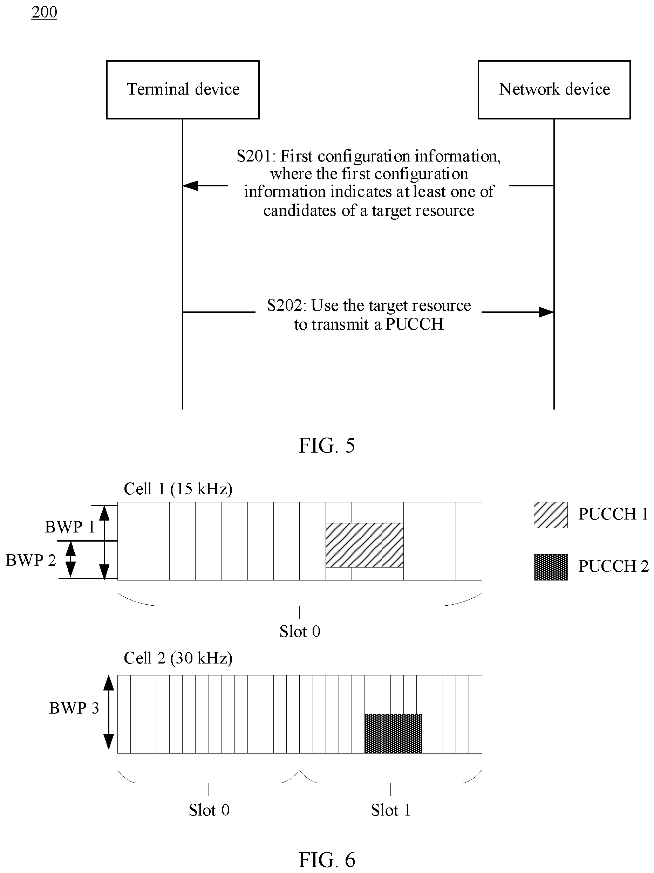

The resource configuration method provided in embodiments of this application is described below in detail with reference to the accompanying drawings. Embodiments provided in this application are applicable to the communication system shown in FIG. 1. The technical solutions of this application are described in detail with reference to FIG. 5.

FIG. 5 is a schematic flowchart of a resource configuration method 200 according to an embodiment of this application. As shown in FIG. 5, the method 200 includes the following plurality of steps and may be performed by a terminal device or a network device, performed by a chip or a circuit used in the terminal device or the network device, or performed by a functional module, in the terminal device or the network device, that can invoke and execute a program.

S201: The network device sends first configuration information to the terminal device, where the first configuration information indicates at least one of candidates of a target resource. Correspondingly, the terminal device receives the first configuration information from the network device.

The candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to an SBFD slot, and the second candidate resource is capable of being used in the SBFD slot and a non-SBFD slot. The target resource is used to transmit a physical uplink control channel PUCCH.

It should be noted that the difference between the maximum payload size carried on the first candidate resource of the first type and the maximum payload size carried on the first candidate resource of the second type may be understood as that the first candidate resource of the first type can carry multi-bit information, and the first candidate resource of the second type can carry 1-bit information. Further, there may be a plurality of first candidate resources of the first type, and each first candidate resource of the first type carries a different maximum payload size. There is only one first candidate resource of the second type. For example, a parameter SPS-PUCCH-AN-List-SBFD is used to configure the first candidate resource of the first type, and a parameter n1PUCCH-AN-SBFD is used to configure the first candidate resource of the second type. A maximum of four PUCCH resources can be configured in the parameter SPS-PUCCH-AN-List-SBFD, and a maximum of one PUCCH resource can be configured in the parameter n1PUCCH-AN-SBFD. The parameter n1PUCCH-AN-SBFD and the parameter SPS-PUCCH-AN-List-SBFD are merely used as names of resources configured for an SBFD symbol. This is not limited in this application.

It should be further noted that the capability of the second candidate resource to be used in the SBFD slot and the non-SBFD slot may be understood as that when a slot of the target resource is in the SBFD slot, the target resource may be the second candidate resource, that is, the second candidate resource may be used in both the SBFD slot and the non-SBFD slot.

Optionally, a type of the second candidate resource includes a third type and/or a fourth type. A maximum payload size carried on the second candidate resource of the third type is different from a maximum payload size carried on the second candidate resource of the fourth type. Specifically, a slot in which the second candidate resource of the third type is located can carry multi-bit information, and a slot in which the second candidate resource of the fourth type is located can carry 1-bit information. Further, there may be a plurality of second candidate resources of the third type, and each second candidate resource of the third type carries a different maximum payload size. There is only one second candidate resource of the fourth type. For example, a parameter SPS-PUCCH-AN-List is used to configure the second candidate resource of the third type, and a parameter n1PUCCH-AN is used to configure the second candidate resource of the fourth type. A maximum of four PUCCH resources can be configured in the parameter SPS-PUCCH-AN-List, and a maximum of one PUCCH resource can be configured in the parameter n1PUCCH-AN.

Optionally, the network device may configure at least one of the first candidate resource and the second candidate resource, and send the first configuration information to the terminal device to indicate at least one of the first candidate resource and the second candidate resource to the terminal device. First candidate resources include the first candidate resource of the first type and the first candidate resource of the second type, for example, SPS-PUCCH-AN-List-SBFD and n1PUCCH-AN-SBFD. Second candidate resources include the second candidate resource of the third type and the second candidate resource of the fourth type, for example, SPS-PUCCH-AN-List and n1PUCCH-AN.

The following describes two configuration manners of the first candidate resource of the first type and the second candidate resource of the third type. In this embodiment of this application, configurations of the parameter SPS-PUCCH-AN-List-SBFD and the parameter SPS-PUCCH-AN-List are used as an example for description.

### Manner 1

SPS-PUCCH-AN-List-SBFD and SPS-PUCCH-AN-List are configured respectively for the SBFD slot and the non-SBFD slot. Maximum payload sizes corresponding to resources in SPS-PUCCH-AN-List-SBFD and SPS-PUCCH-AN-List are different. Specifically, a resource list SPS-PUCCH-AN-List-SBFD, that is, the first candidate resource of the first type, is configured for SBFD. A resource list SPS-PUCCH-AN-List-r16, that is, the second candidate resource of the third type, is configured for non-SBFD. Maximum payload sizes (maxpayloadsize) corresponding to resources configured in SPS-PUCCH-AN-List-SBFD and SPS-PUCCH-AN-List-r16 are independently configured.

Optionally, a maximum payload size carried on a resource in the first candidate resource of the first type and a maximum payload size carried on a resource in the second candidate resource of the third type are independently configured. In other words, there are N resources in the first candidate resource of the first type, and there are M resources in the second candidate resource of the third type. N and M are positive integers. N and M may be different or may be the same. For example, a maximum payload size carried on an *i*^{th} resource in the first candidate resource of the first type and a maximum payload size carried on an *i*^{th} resource in the second candidate resource of the third type are independently configured, and the two maximum payload sizes may be different or may be the same, where *i* is a positive integer, and *i* is less than or equal to min(N, M).

For example, a sequence including a maximum of four SPS-PUCCH-AN-r16 information elements is configured for each of SPS-PUCCH-AN-List-SBFD and SPS-PUCCH-AN-List-r16. Each SPS-PUCCH-AN-r16 information element includes information such as a time domain position, a frequency domain position, and a maximum payload size of a PUCCH resource. The maximum payload size of the resource carried on each SPS-PUCCH-AN-r16 information element is independently configured. In other words, a maximum payload size carried on a resource in SPS-PUCCH-AN-List-SBFD and a maximum payload size carried on a resource in SPS-PUCCH-AN-List-r16 may be the same or may be different. Specifically, there are N resources in SPS-PUCCH-AN-List-SBFD, and there are M resources in SPS-PUCCH-AN-List-r16. N and M are positive integers, and N and M may be different or may be the same. For example, a maximum payload size carried on an *i*^{th} resource in SPS-PUCCH-AN-List-SBFD and a maximum payload size carried on an *i*^{th} resource in SPS-PUCCH-AN-List-r16 are independently configured, and the two maximum payload sizes may be different or may be the same, where *i* is a positive integer, and *i* is less than or equal to min(N, M). This is not limited in this application.

### Manner 2

Different resources are respectively configured in a same list for the SBFD slot and the non-SBFD slot. Specifically, when the second candidate resource of the third type is configured, resources used for the SBFD slot and the non-SBFD slot are configured in the second candidate resource of the third type. A time domain position and/or a frequency domain position of the resource used for the SBFD slot is different from a time domain position and/or a frequency domain position of the resource used for the non-SBFD slot, and a same maximum payload size is used for a same group of resources in the second candidate resource of the third type.

For example, different resources used for the SBFD slot and the non-SBFD slot are configured for SPS-PUCCH-AN-List. For example, a sequence including a maximum of four SPS-PUCCH-AN-r16 information elements is configured in SPS-PUCCH-AN-List-r16. Each SPS-PUCCH-AN-r16 information element includes a PUCCH resource configured for the SBFD slot and a PUCCH resource configured for the non-SBFD slot. In addition, the PUCCH resource configured for the SBFD slot and the PUCCH resource configured for the non-SBFD slot are independently configured. Specifically, the PUCCH resource configured for the SBFD slot and the PUCCH resource configured for the non-SBFD slot may be the same or may be different. For example, a parameter sps-PUCCH-AN-ResourceID-SBFD and an index of a PUCCH resource, for example, a time domain position and a frequency domain position of the PUCCH resource, corresponding to the parameter sps-PUCCH-AN-ResourceID-SBFD are configured. sps-PUCCH-AN-ResourceID-SBFD is a resource used for the SBFD slot. A parameter sps-PUCCH-AN-ResourceID-r16 and an index of a PUCCH resource, for example, a time domain position and a frequency domain position of the PUCCH resource, corresponding to the parameter sps-PUCCH-AN-ResourceID-r16 are configured. sps-PUCCH-AN-ResourceID is a resource used for the non-SBFD slot. A maximum payload size carried on the PUCCH resource corresponding to the parameter sps-PUCCH-AN-ResourceID-SBFD is the same as a maximum payload size carried on the PUCCH resource corresponding to the parameter sps-PUCCH-AN-ResourceID-r16.

Optionally, when the first configuration information indicates the second candidate resource, the first configuration information specifically includes a configuration of the second candidate resource and frequency domain offset information, where the frequency domain offset information indicates a frequency domain offset of the first candidate resource relative to the second candidate resource.

Specifically, when the first configuration information indicates the second candidate resource, the first candidate resource may be determined based on the frequency domain offset information. The first candidate resource is determined by adding the frequency domain offset to a frequency domain position of a resource in the second candidate resource. In other words, a frequency domain position of a resource in the first candidate resource is different from the frequency domain position of the resource in the second candidate resource.

It should be noted that a unit of the frequency domain offset may be an RB or a resource block group (resource block group, RBG). One RBG includes a plurality of RBs. For example, one RBG is equal to *N* RBs, and a value of *N* may be predefined in a protocol or configured by the network device. This is not limited in embodiments of this application.

The following describes a configuration of the frequency domain offset with reference to FIG. 6. The configuration of the frequency domain offset may include but is not limited to the following manners.

### (1) The frequency domain offset is independently configured for a specific cell.

Specifically, cells are cells in which PUCCH transmission can be performed, and the cells include a primary cell and a secondary cell. Specific cells in FIG. 6 include a cell 1 and a cell 2, a subcarrier spacing of the cell 1 is 15 kHz, and a subcarrier spacing of the cell 2 is 30 kHz. A frequency domain offset is configured for each of the cell 1 and the cell 2.

### (2) The frequency domain offset is independently configured for a specific carrier.

In FIG. 6, during uplink transmission, one cell corresponds to two carriers; and during downlink transmission, one cell corresponds to one carrier. For PUCCH transmission, one cell corresponds to two carriers. It is assumed that two specific carriers corresponding to the cell 1 are respectively a carrier 1 and a carrier 2. In this case, a frequency domain offset is configured for each of the carrier 1 and the carrier 2. Frequency domain offsets corresponding to the carrier 1 and the carrier 2 may be the same or may be different. This is not limited in this application.

### (3) The frequency domain offset is independently configured for a specific bandwidth part BWP.

The cell 1 in FIG. 6 is used as an example. When a subcarrier spacing is 15 kHz, a bandwidth of the BWP and a bandwidth of the cell 1 may be the same or may be different. For example, a bandwidth of a BWP 1 is 40 MHz, a bandwidth of a BWP 2 is 20 MHz, and a frequency domain offset is configured for each of the BWP 1 and the BWP 2. Frequency domain offsets corresponding to the BWP 1 and the BWP 2 may be the same or may be different. This is not limited in embodiments of this application.

### (4) Different frequency domain offsets are independently configured for a plurality of candidate formats included in the PUCCH.

Each PUCCH format may include one or more PUCCH resources, which are configured by the network device. There are five PUCCH formats (formats): a format 0, a format 1, a format 2, a format 3, and a format 4. Each PUCCH format may occupy a different orthogonal frequency division multiplexing (orthogonal frequency division multiplexing, OFDM) symbol length. For example, an OFDM symbol length occupied by the format 0 is 2, that is, two OFDM symbols are occupied; and an OFDM symbol length occupied by the format 1 is 11, that is, 11 OFDM symbols are occupied. A frequency domain offset N1 is configured on the format 0, and a frequency domain offset N2 is configured on the format 1. N1 and N2 are positive integers, and values of N1 and N2 may be equal or may not be equal. This is not limited in embodiments of this application.

(5) One frequency domain offset is independently configured for each SPS configuration. One SPS configuration includes a periodicity of a DL SPS PDSCH, a quantity of HARQ processes configured for the DL SPS PDSCH, a modulation and coding scheme list used by the terminal device for downlink DL SPS, and a PUCCH resource used for HARQ feedback of DL SPS.

A configured offset frequency domain quantity is combined with the PUCCH resource used for HARQ feedback of DL SPS in the SPS configuration, to determine a PUCCH resource used for carrying HARQ-ACK information of an SPS PDSCH in SBFD.

Optionally, one frequency domain offset may be configured for each resource in the second candidate resource.

S202: The terminal device uses the target resource to transmit the PUCCH. Correspondingly, the network device receives the PUCCH on the target resource.

In an implementation, the terminal device may use, as the target resource, at least one of the candidates of the target resource indicated by the first configuration information, to transmit the PUCCH. Specifically, the terminal device selects, based on a position of a slot of the target resource, a resource corresponding to the slot to transmit the PUCCH, that is, selects, as the target resource based on a slot position of feedback information of the SPS PDSCH, the resource corresponding to the slot, and sends the feedback information of the SPS PDSCH on the target resource. That the terminal device uses at least one of the candidates of the target resource indicated by the first configuration information to transmit the PUCCH specifically includes:

When the first configuration information does not indicate the first candidate resource, the target resource is the second candidate resource. Specifically, the first configuration information does not indicate the first candidate resource, but indicates the second candidate resource, and the second candidate resource is capable of being used in the SBFD slot and the non-SBFD slot. Therefore, the terminal device can use the second candidate resource of the third type or the second candidate resource of the fourth type to transmit the PUCCH. In other words, the terminal device sends the feedback information of the SPS PDSCH on the second candidate resource of the third type or the second candidate resource of the fourth type.

When a slot of the target resource is in the SBFD slot, and at least one resource indicated by the first configuration information includes the first candidate resource, the target resource is the first candidate resource.

When a slot of the target resource is in the SBFD slot, at least one resource indicated by the first configuration information does not include the first candidate resource, and the at least one resource indicated by the first configuration information includes the second candidate resource, the target resource is the second candidate resource.

For example, when the first configuration information indicates the first candidate resource and the second candidate resource, the terminal device preferentially uses the first candidate resource dedicated to the SBFD slot to transmit the PUCCH, or preferentially uses the second candidate resource that is capable of being used in the non-SBFD slot, to transmit the PUCCH. For example, if the slot of the target resource is in the SBFD slot, the terminal device uses a resource in the first candidate resource (for example, n1PUCCH-AN-SBFD or SPS-PUCCH-AN-List-SBFD) to transmit the PUCCH. In this case, the target resource is the first candidate resource. Therefore, the terminal device can use the first candidate resource of the first type or the first candidate resource of the second type to transmit the PUCCH. In other words, the terminal device sends the feedback information of the SPS PDSCH on the first candidate resource of the first type or the first candidate resource of the second type. For another example, if the slot of the target resource is in the non-SBFD slot, the terminal device uses a resource in the second candidate resource (for example, n1PUCCH-AN or SPS-PUCCH-AN-List) to transmit the PUCCH. In this case, the target resource is the second candidate resource. Therefore, the terminal device can use the second candidate resource of the third type or the second candidate resource of the fourth type to transmit the PUCCH. In other words, the terminal device sends the feedback information of the SPS PDSCH on the second candidate resource of the third type or the second candidate resource of the fourth type.

For example, when the first configuration information indicates the second candidate resource, but does not indicate the first candidate resource, the terminal device may use a resource in the second candidate resource to transmit the PUCCH. For example, when the slot of the target resource is in the SBFD slot, and the at least one resource indicated by the first configuration information does not include the first candidate resource (for example, n1PUCCH-AN-SBFD or SPS-PUCCH-AN-List-SBFD), but includes the second candidate resource (for example, n1PUCCH-AN and/or SPS-PUCCH-AN-List), the terminal device uses the resource in the second candidate resource to transmit the PUCCH, that is, the target resource is the second candidate resource.

For example, when the first configuration information indicates the first candidate resource, but does not indicate the second candidate resource, the terminal device may use a resource in the first candidate resource to transmit the PUCCH. For example, when the slot of the target resource is in the non-SBFD slot, and the at least one resource indicated by the first configuration information does not include the second candidate resource (for example, n1PUCCH-AN or SPS-PUCCH-AN-List), but includes the first candidate resource (for example, n1PUCCH-AN-SBFD and/or SPS-PUCCH-AN-List-SBFD), the terminal device uses the resource in the first candidate resource to transmit the PUCCH, that is, the target resource is the first candidate resource. Therefore, the terminal device can use the first candidate resource of the first type or the first candidate resource of the second type to transmit the PUCCH. In other words, the terminal device sends the feedback information of the SPS PDSCH on the first candidate resource of the first type or the first candidate resource of the second type. For specific use rules, refer to Table 2.

**Table 2**

| Case | *n1PUCCH-AN* | *SPS-PUCCH-AN-List* | Configuration used for non-SBFD resources | *n1PUCCH-AN-SBFD* | *SPS-PUCCH-AN-List-SBFD* | Configuration used for SBFD resources |
|---|---|---|---|---|---|---|
| 1 | Y | Y | *SPS-PUCCH-AN-List* | Y | Y | *SPS-PUCCH-AN-List-SBFD* |
| 2 | Y | Y | *SPS-PUCCH-AN-List* | Y | N | *n1PUCCH-AN-SBFD* |
| 3 | Y | Y | *SPS-PUCCH-AN-List* | N | Y | *SPS-PUCCH-AN-List-SBFD* |
| 4 | Y | Y | *SPS-PUCCH-AN-List* | N | N | *SPS-PUCCH-AN-List* |
| 5 | Y | N | *n1PUCCH-AN* | Y | Y | *SPS-PUCCH-AN-List-SBFD* |
| 6 | Y | N | *n1PUCCH-AN* | Y | N | *n1PUCCH-AN-SBFD* |
| 7 | Y | N | *n1PUCCH-AN* | N | Y | *SPS-PUCCH-AN-List-SBFD* |
| 8 | Y | N | *n1PUCCH-AN* | N | N | *n1PUCCH-AN* |
| 9 | N | Y | *SPS-PUCCH-AN-List* | Y | Y | *SPS-PUCCH-AN-List-SBFD* |
| 10 | N | Y | *SPS-PUCCH-AN-List* | Y | N | *n1PUCCH-AN-SBFD* |
| 11 | N | Y | *SPS-PUCCH-AN-List* | N | Y | *SPS-PUCCH-AN-List-SBFD* |
| 12 | N | Y | *SPS-PUCCH-AN-List* | N | N | *SPS-PUCCH-AN-List* |
| 13 | N | N | *SPS-PUCCH-AN-List-SBFD* | Y | Y | *SPS-PUCCH-AN-List-SBFD* |
| 14 | N | N | *n1PUCCH-AN-SBFD* | Y | N | *n1PUCCH-AN-SBFD* |
| 15 | N | N | *SPS-PUCCH-AN-List-SBFD* | N | Y | *SPS-PUCCH-AN-List-SBFD* |
| 16 | N | N | Error case | N | N | Error case |

As shown in Table 2, in a 2^{nd} row of Table 2, that is, a case (case) 1, the first configuration information sent by the network device includes both a configuration of the first candidate resource and a configuration of the second candidate resource. That is, the first configuration information includes the first candidate resource of the first type, the first candidate resource of the second type, the second candidate resource of the third type, and the second candidate resource of the fourth type, for example, the parameters n1PUCCH-AN-SBFD and SPS-PUCCH-AN-List-SBFD used for configuring the HARQ-ACK information of the SPS PDSCH in the SBFD slot, and the parameters n1PUCCH-AN and SPS-PUCCH-AN-List used for configuring HARQ-ACK information of an SPS PDSCH in the non-SBFD slot. In this case, because the network device configures both the first candidate resource and the second candidate resource, the terminal device preferentially uses, based on the slot position of the target resource, the resource configured for the slot to transmit the PUCCH. For example, the terminal device uses a resource in the parameter SPS-PUCCH-AN-List-SBFD to transmit the HARQ-ACK information of the SPS PDSCH in the SBFD slot, and uses a resource in the parameter SPS-PUCCH-AN-List to transmit the HARQ-ACK information of the SPS PDSCH in the non-SBFD slot.

For example, in a case 4, the first configuration information sent by the network device includes the configuration of the second candidate resource, but does not include the configuration of the first candidate resource. When the slot of the target resource is in the SBFD slot, the terminal device may use the resource in the second candidate resource to transmit the PUCCH. For example, the second candidate resource of the third type or the second candidate resource of the fourth type is used to transmit the PUCCH. Specifically, the terminal device uses the resource in the parameter SPS-PUCCH-AN-List to transmit the HARQ-ACK information of the SPS PDSCH in the SBFD slot.

For example, in a case 13, the first configuration information sent by the network device includes the configuration of the first candidate resource, but does not include the configuration of the second candidate resource. When the slot of the target resource is in the non-SBFD slot, the terminal device may use the resource in the first candidate resource to transmit the PUCCH. For example, the first candidate resource of the first type or the first candidate resource of the second type is used to transmit the PUCCH. Specifically, the terminal device uses the resource in the parameter SPS-PUCCH-AN-List-SBFD to transmit the HARQ-ACK information of the SPS PDSCH in the non-SBFD slot.

In this embodiment of this application, when the first configuration information indicates only one type of candidate resource, the terminal device can also determine the target resource for PUCCH transmission. In this way, signaling overhead can be reduced.

Optionally, in a special example, when the network device does not configure the second candidate resource, specifically, when the network device does not configure the second candidate resource of the third type or the second candidate resource of the fourth type, the terminal device considers that the network device has a configuration error, and therefore, does not feed back the HARQ-ACK information for the SPS PDSCH in the SBFD slot or the SPS PDSCH in the non-SBFD slot. Specific use rules are shown in Table 3.

**Table 3**

| Case | n1PUCCH-AN | SPS-PUCCH-AN-List | Configuration used for non-SBFD resources | n1PUCCH-AN-SBFD | SPS-PUCCH-AN-List-SBFD | Configuration used for SBFD resources |
|---|---|---|---|---|---|---|
| 1 | Y | Y | SPS-PUCCH-AN-List | Y | Y | SPS-PUCCH-AN-List-SBFD |
| 2 | Y | Y | SPS-PUCCH-AN-List | Y | N | n1PUCCH-AN-SBFD |
| 3 | Y | Y | SPS-PUCCH-AN-List | N | Y | SPS-PUCCH-AN-List-SBFD |
| 4 | Y | Y | SPS-PUCCH-AN-List | N | N | SPS-PUCCH-AN-List |
| 5 | Y | N | n1PUCCH-AN | Y | Y | SPS-PUCCH-AN-List-SBFD |
| 6 | Y | N | n1PUCCH-AN | Y | N | n1PUCCH-AN-SBFD |
| 7 | Y | N | n1PUCCH-AN | N | Y | SPS-PUCCH-AN-List-SBFD |
| 8 | Y | N | n1PUCCH-AN | N | N | n1PUCCH-AN |
| 9 | N | Y | SPS-PUCCH-AN-List | Y | Y | SPS-PUCCH-AN-List-SBFD |
| 10 | N | Y | SPS-PUCCH-AN-List | Y | N | nlPUCCH-AN-SBFD |
| 11 | N | Y | SPS-PUCCH-AN-List | N | Y | SPS-PUCCH-AN-List-SBFD |
| 12 | N | Y | SPS-PUCCH-AN-List | N | N | SPS-PUCCH-AN-List |
| 13 | N | N | Error case | Y | Y | Error case |
| 14 | N | N | Error case | Y | N | Error case |
| 15 | N | N | Error case | N | Y | Error case |
| 16 | N | N | Error case | N | N | Error case |

As shown in Table 3, in a case 4, the first configuration information sent by the network device includes the configuration of the second candidate resource, but does not include the configuration of the first candidate resource. When the slot of the target resource is in the SBFD slot, the terminal device may use the resource in the second candidate resource to transmit the PUCCH. For example, the second candidate resource of the third type or the second candidate resource of the fourth type is used to transmit the PUCCH. Specifically, the terminal device uses a resource in the parameter SPS-PUCCH-AN-List to transmit the HARQ-ACK information of the SPS PDSCH in the SBFD slot.

For example, in a case 13, a case 14, and a case 15, the first configuration information sent by the network device includes the configuration of the first candidate resource, but does not include the configuration of the second candidate resource. In this case, regardless of whether the slot of the target resource is in the non-SBFD slot or the SBFD slot, the terminal device considers that a configuration error exists. In other words, the terminal device does not feed back the HARQ-ACK information for the SPS PDSCH in the SBFD slot and the SPS PDSCH in the non-SBFD slot. For example, when the slot of the target resource is in the SBFD slot, the first configuration information includes the configuration of the first candidate resource, but the first configuration information does not include the second candidate resource. Therefore, even if the first configuration information includes the configuration of the first candidate resource, the terminal device cannot use a resource in the first candidate resource to transmit the PUCCH. Specifically, the terminal device cannot use a resource in the parameter SPS-PUCCH-AN-List-SBFD to transmit the HARQ-ACK information of the SPS PDSCH in the SBFD slot.

Optionally, in another special example, when the network device does not configure either of the first candidate resource and the second candidate resource, in the SBFD slot, PUCCH transmission may be performed by using configuration information used in the non-SBFD slot, but in the non-SBFD slot, configuration information used in the SBFD slot cannot be used to transmit the PUCCH. Specific use rules are shown in Table 4.

**Table 4**

| Case | n1PUCCH-AN | SPS-PUCCH-AN-List | Configuration used for non-SBFD resources | n1PUCCH-AN-SBFD | SPS-PUCCH-AN-List-SBFD | Configuration used for SBFD resources |
|---|---|---|---|---|---|---|
| 1 | Y | Y | SPS-PUCCH-AN-List | Y | Y | SPS-PUCCH-AN-List-SBFD |
| 2 | Y | Y | SPS-PUCCH-AN-List | Y | N | n1PUCCH-AN-SBFD |
| 3 | Y | Y | SPS-PUCCH-AN-List | N | Y | SPS-PUCCH-AN-List-SBFD |
| 4 | Y | Y | SPS-PUCCH-AN-List | N | N | SPS-PUCCH-AN-List |
| 5 | Y | N | n1PUCCH-AN | Y | Y | SPS-PUCCH-AN-List-SBFD |
| 6 | Y | N | n1PUCCH-AN | Y | N | n1PUCCH-AN-SBFD |
| 7 | Y | N | n1PUCCH-AN | N | Y | SPS-PUCCH-AN-List-SBFD |
| 8 | Y | N | n1PUCCH-AN | N | N | n1PUCCH-AN |
| 9 | N | Y | SPS-PUCCH-AN-List | Y | Y | SPS-PUCCH-AN-List-SBFD |
| 10 | N | Y | SPS-PUCCH-AN-List | Y | N | n1PUCCH-AN-SBFD |
| 11 | N | Y | SPS-PUCCH-AN-List | N | Y | SPS-PUCCH-AN-List-SBFD |
| 12 | N | Y | SPS-PUCCH-AN-List | N | N | SPS-PUCCH-AN-List |
| 13 | N | N | Error case | Y | Y | SPS-PUCCH-AN-List-SBFD |
| 14 | N | N | Error case | Y | N | n1PUCCH-AN-SBFD |
| 15 | N | N | Error case | N | Y | SPS-PUCCH-AN-List-SBFD |
| 16 | N | N | Error case | N | N | Error case |

As shown in Table 4, use rules in cases 1 to 12 and a case 16 are the same as the use rules in the cases 1 to 12 and the case 16 in Table 3. Details are not described herein again. A difference is that in the case 13, the case 14, and the case 15, the first configuration information sent by the network device includes the configuration of the first candidate resource, but does not include the configuration of the second candidate resource. In this case, when the slot of the target resource is in the SBFD slot, the terminal device may use the resource in the first candidate resource to transmit the PUCCH. However, when the slot of the target resource is in the non-SBFD slot, the terminal device cannot use the resource in the first candidate resource to transmit the PUCCH. Specifically, the terminal device cannot use a resource in the parameter SPS-PUCCH-AN-List-SBFD to transmit the HARQ-ACK information of the SPS PDSCH in the non-SBFD slot.

It should be noted that the terminal device and the network device may implement at least one of the 16 cases in the foregoing tables, and are not required to implement all possible manners.

In this embodiment of this application, when the first configuration information indicates only one type of candidate resource, the terminal device can also determine the target resource for PUCCH transmission. In this way, signaling overhead can be reduced.

Optionally, when the first configuration information does not indicate the first candidate resource and the second candidate resource, the terminal device neither feeds back the HARQ-ACK information of the SPS PDSCH corresponding to the SBFD slot nor feeds back the HARQ-ACK information of the SPS PDSCH corresponding to the non-SBFD slot.

In another implementation, when the first configuration information does not include the configuration of the first candidate resource, but includes the configuration of the second candidate resource and the frequency domain offset information, the terminal device determines the first candidate resource based on the configuration of the second candidate resource and the frequency domain offset information, and then use a resource in the first candidate resource to transmit the PUCCH in the SBFD slot.

Specifically, the first configuration information indicates the second candidate resource, and the terminal device uses a resource in the second candidate resource to transmit the PUCCH. For example, the terminal device uses the second candidate resource of the third type or the second candidate resource of the fourth type to transmit the HARQ-ACK information of the SPS PDSCH in the non-SBFD slot. The frequency domain offset is added to a frequency domain position of the second candidate resource of the third type or a frequency domain position of the second candidate resource of the fourth type, to determine the first candidate resource of the first type or the first candidate resource of the second type. In other words, the first candidate resource can be determined by adding the frequency domain offset to a frequency domain position of the second candidate resource.

Optionally, when the first configuration information sent by the network device does not include the frequency domain offset information, and the slot of the target resource is in the SBFD slot, in the SBFD slot, the second candidate resource may be used to transmit the HARQ-ACK information of the SPS PDSCH in the SBFD slot. For example, the terminal device uses the second candidate resource of the third type or the second candidate resource of the fourth type to transmit the HARQ-ACK information of the SPS PDSCH in the SBFD slot.

It should be noted that, when the network device does not configure the frequency domain offset, for the SBFD slot, the terminal device may not feed back HARQ-ACK information of a corresponding SPS PDSCH.

In this embodiment of this application, the terminal device uses at least one resource in the candidates of the target resource indicated by the first configuration information to transmit the PUCCH. Because the first candidate resource is a resource dedicated to the SBFD slot, and the second candidate resource is capable of being used in the SBFD slot and the non-SBFD slot, based on the target resource indicated by the first configuration information, the terminal device can determine a PUCCH resource for feedback information in the SBFD slot, and can also determine a PUCCH resource for feedback information in the non-SBFD slot. In this way, flexibility of resource scheduling can be improved, thereby ensuring integrity of an SBFD system.

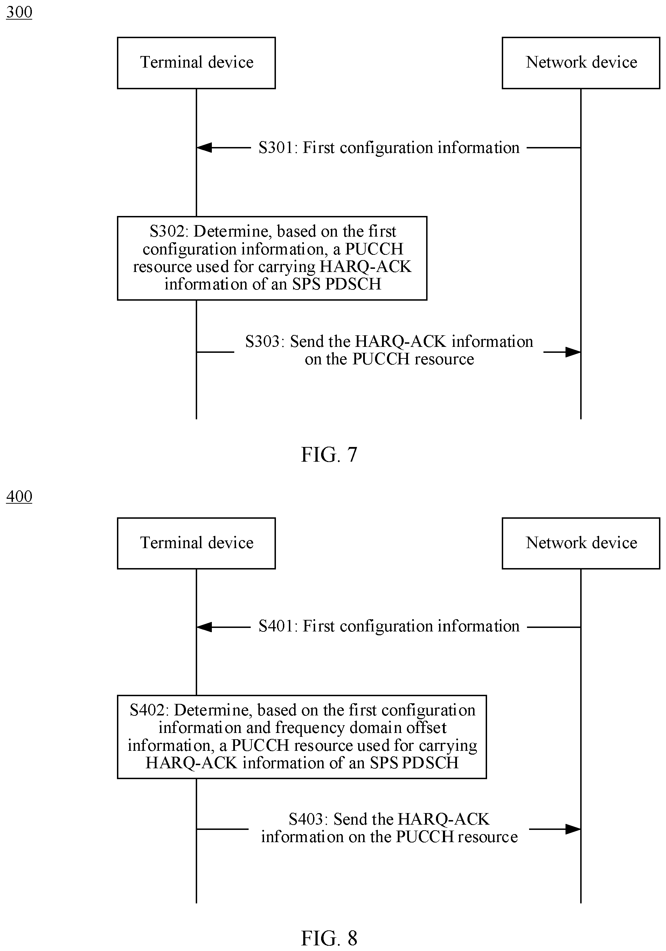

FIG. 7 is a schematic flowchart of a resource configuration method 300 according to an embodiment of this application. As shown in FIG. 7, the method 300 includes the following plurality of steps and may be performed by a terminal device or a network device, performed by a chip or a circuit used in the terminal device or the network device, or performed by a functional module, in the terminal device or the network device, that can invoke and execute a program.

S301: The network device sends first configuration information to the terminal device. Correspondingly, the terminal device receives the first configuration information from the network device.

The first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to an SBFD slot, and the second candidate resource is capable of being used in the SBFD slot and a non-SBFD slot. The target resource is used to transmit a physical uplink control channel PUCCH. A type of the second candidate resource includes a third type and/or a fourth type, and a maximum payload size carried on the second candidate resource of the third type is different from a maximum payload size carried on the second candidate resource of the fourth type.

A parameter SPS-PUCCH-AN-List-SBFD is used to configure the first candidate resource of the first type, and a parameter n1PUCCH-AN-SBFD is used to configure the first candidate resource of the second type. A maximum of four PUCCH resources can be configured in the parameter SPS-PUCCH-AN-List-SBFD, and a maximum of one PUCCH resource can be configured in the parameter n1PUCCH-AN-SBFD. The parameter n1PUCCH-AN-SBFD and the parameter SPS-PUCCH-AN-List-SBFD are merely used as names of resources configured for an SBFD symbol. This is not limited in this application. A parameter SPS-PUCCH-AN-List is used to configure the second candidate resource of the third type, and a parameter n1PUCCH-AN is used to configure the second candidate resource of the fourth type. A maximum of four PUCCH resources can be configured in the parameter SPS-PUCCH-AN-List, and a maximum of one PUCCH resource can be configured in the parameter n1PUCCH-AN.

For specific configuration manners of the parameter SPS-PUCCH-AN-List-SBFD and the parameter SPS-PUCCH-AN-List, refer to step S201. Details are not described herein again.

S302: The terminal device determines, based on the first configuration information, a PUCCH resource used for carrying HARQ-ACK information of an SPS PDSCH.

The terminal device determines, based on the target resource indicated by the first configuration information and a position of a slot of the target resource, PUCCH resources used for HARQ-ACK information of SPS PDSCHs in different types of slots. For example, when the first configuration information indicates the first candidate resource, and the slot of the target resource is in the SBFD slot, the target resource is the first candidate resource, and the terminal device determines to use a resource in the first candidate resource to transmit HARQ-ACK information of an SPS PDSCH in the SBFD slot. For another example, when the first configuration information indicates the second candidate resource, and the slot of the target resource is in the non-SBFD slot, the target resource is the second candidate resource, and the terminal device determines to use a resource in the second candidate resource to transmit HARQ-ACK information of an SPS PDSCH in the non-SBFD slot.

When the first configuration information indicates only one of the first candidate resource and the second candidate resource, for a use rule of the target resource, refer to step S202. Details are not described herein again.

S303: The terminal device sends the HARQ-ACK information on the PUCCH resource.

Specifically, the terminal device sends, on the target resource indicated by the first configuration information, the HARQ-ACK information of the SPS PDSCH. The target resource is one of the candidates of the target resource. For a specific implementation, refer to step S202. Details are not described herein again.

In this embodiment of this application, the terminal device uses at least one resource in the candidates of the target resource indicated by the first configuration information to transmit the PUCCH. Because the first candidate resource is a resource dedicated to the SBFD slot, and the second candidate resource is capable of being used in the SBFD slot and the non-SBFD slot, based on the target resource indicated by the first configuration information, the terminal device can determine a PUCCH resource for feedback information in the SBFD slot, and can also determine a PUCCH resource for feedback information in the non-SBFD slot. In this way, flexibility of resource scheduling can be improved, thereby ensuring integrity of an SBFD system.

FIG. 8 is a schematic flowchart of a resource configuration method 400 according to an embodiment of this application. As shown in FIG. 8, the method 400 includes the following plurality of steps, and may be performed by a terminal device or a network device, performed by a chip or a circuit used in the terminal device or the network device, or performed by a functional module, in the terminal device or the network device, that can invoke and execute a program.

S401: The network device sends first configuration information to the terminal device. Correspondingly, the terminal device receives the first configuration information from the network device.

The first configuration information indicates a second candidate resource, a type of the second candidate resource includes a third type and/or a fourth type, and a maximum payload size carried on the second candidate resource of the third type is different from a maximum payload size carried on the second candidate resource of the fourth type. A parameter SPS-PUCCH-AN-List is used to configure the second candidate resource of the third type, and a parameter n1PUCCH-AN is used to configure the second candidate resource of the fourth type. A maximum of four PUCCH resources can be configured in the parameter SPS-PUCCH-AN-List, and a maximum of one PUCCH resource can be configured in the parameter n1PUCCH-AN.

Optionally, the first configuration information further includes frequency domain offset information, and the frequency domain offset information indicates a frequency domain offset of the first candidate resource relative to the second candidate resource.

For a specific configuration manner of the frequency domain offset, refer to step S201. Details are not described herein again.

S402: The terminal device determines, based on the first configuration information and the frequency domain offset information, a PUCCH resource used for carrying HARQ-ACK information of an SPS PDSCH.

The terminal device determines, based on the second candidate resource indicated by the first configuration information, a PUCCH resource used for HARQ-ACK information of an SPS PDSCH in a non-SBFD slot. Specifically, the first configuration information indicates the second candidate resource, and the terminal device uses a resource in the second candidate resource to transmit the HARQ-ACK information of the SPS PDSCH in the non-SBFD slot. For example, the terminal device uses the second candidate resource of the third type or the second candidate resource of the fourth type to transmit the HARQ-ACK information of the SPS PDSCH in the non-SBFD slot. The frequency domain offset is added to a frequency domain position of the second candidate resource of the third type or a frequency domain position of the second candidate resource of the fourth type, to determine a first candidate resource of a first type or a first candidate resource of a second type. In other words, the first candidate resource can be determined by adding the frequency domain offset to the frequency domain position of the second candidate resource. A resource in the first candidate resource is used to transmit HARQ-ACK information of an SPS PDSCH in an SBFD slot. For a specific implementation, refer to step S202. Details are not described herein again.

S403: The terminal device sends the HARQ-ACK information on the PUCCH resource.

Specifically, the terminal device sends, on the second candidate resource indicated by the first configuration information, the HARQ-ACK information of the SPS PDSCH in the non-SBFD slot. Then, the HARQ-ACK information of the SPS PDSCH of the SBFD slot is sent on the first candidate resource determined based on the second candidate resource and the frequency domain offset information. For a specific implementation, refer to step S202. Details are not described herein again.

In this embodiment of this application, when the first configuration information includes a configuration of the second candidate resource and the frequency domain offset information but does not include a configuration of the first candidate resource, the terminal device can determine the first candidate resource based on the second candidate resource by using the frequency domain offset information. In other words, a frequency domain position of a resource in the first candidate resource is different from a frequency domain position of a resource in the second candidate resource. Therefore, when the first configuration information does not indicate the first candidate resource, the target resource for PUCCH transmission in the SBFD slot may be determined based on the second candidate resource and the frequency domain offset information that are included in the first configuration information. In this way, flexibility of resource scheduling can be improved, and signaling overhead can be reduced, thereby ensuring integrity of an SBFD system.

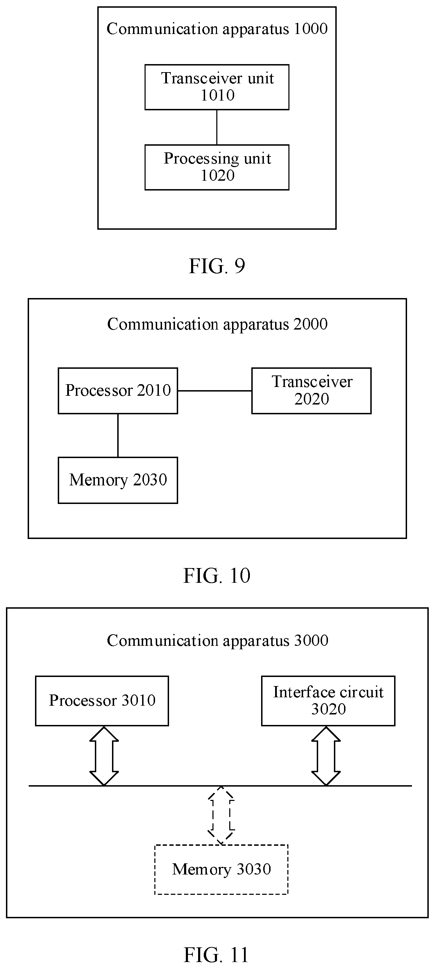

The following describes apparatus embodiments in this application with reference to FIG. 9 to FIG. 11. These apparatuses may be configured to implement the functions of the terminal device or the network device in the foregoing method embodiments. Therefore, beneficial effects of the foregoing method embodiments can also be implemented. In embodiments of this application, the communication apparatus may be a terminal device, a network device, or a module (for example, a chip) used in the terminal device or the network device.

FIG. 9 is a diagram of a structure of a communication apparatus according to an embodiment of this application. As shown in FIG. 9, the communication apparatus 1000 includes a transceiver unit 1010 and a processing unit 1020. The transceiver unit 1010 may communicate with the outside. The processing unit 1020 is configured to process data. The transceiver unit 1010 may also be referred to as a communication interface or a transceiver unit.

In a possible design, the apparatus 1000 may implement steps or procedures performed by the terminal device in the foregoing method embodiments. The processing unit 1020 is configured to perform a processing-related operation of the terminal device in the foregoing method embodiments. The transceiver unit 1010 is configured to perform a receiving/sending-related operation of the network device in the foregoing method embodiments.

For example, the transceiver unit 1010 receives first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot.

For example, the transceiver unit 1010 is configured to use the target resource to transmit a physical uplink control channel PUCCH.

In another possible design, the apparatus 1000 may implement steps or procedures performed by the network device in the foregoing method embodiments. The transceiver unit 1010 is configured to perform a receiving/sending-related operation of the network device in the foregoing method embodiments. The processing unit 1020 is configured to perform a processing-related operation of the network device in the foregoing method embodiments.

For example, the transceiver unit 1010 is configured to send first configuration information, where the first configuration information indicates at least one of candidates of a target resource, the candidates of the target resource include a first candidate resource and a second candidate resource, a type of the first candidate resource includes a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot.

Optionally, the transceiver unit 1010 is further configured to receive a physical uplink control channel PUCCH on the target resource.

It should be understood that the apparatus 1000 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art can understand that the apparatus 1000 may be specifically the transmit end in the foregoing embodiments, and may be configured to perform procedures and/or steps corresponding to the transmit end in the foregoing method embodiments. Alternatively, the apparatus 1000 may be specifically the receive end in the foregoing embodiments, and may be configured to perform procedures and/or steps corresponding to the receive end in the foregoing method embodiments. To avoid repetition, details are not described herein again.

The apparatus 1000 in the foregoing solutions has a function of implementing corresponding steps performed by the transmit end in the foregoing methods, or the apparatus 1000 in the foregoing solutions has a function of implementing corresponding steps performed by the receive end in the foregoing methods. The function may be implemented by hardware, or may be implemented by hardware executing corresponding software. The hardware or the software includes one or more modules corresponding to the foregoing functions. For example, the transceiver unit may be replaced by a transceiver (for example, a sending unit in the transceiver unit may be replaced by a transmitter, and a receiving unit in the transceiver unit may be replaced by a receiver machine), and another unit, for example, the processing unit, may be replaced by a processor, to separately perform receiving-sending operations and a related processing operation in the method embodiments.

In addition, the transceiver unit may alternatively be a transceiver circuit (for example, may include a receiving circuit and a sending circuit), and the processing unit may be a processing circuit. In this embodiment of this application, the apparatus 1000 may be a receiving device or a sending device in the foregoing embodiments, or may be a chip or a chip system, for example, a system-on-chip (system-on-chip, SoC), in the receiving device or the sending device. The transceiver unit may be an input/output circuit or a communication interface. The processing unit is a processor, a microprocessor, or an integrated circuit integrated on the chip. This is not limited herein.

FIG. 10 is a diagram of a structure of another communication apparatus 2000 according to an embodiment of this application. As shown in FIG. 10, the apparatus 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the apparatus 2000 may further include a memory 2030. The memory 2030 communicates with the processor 2010 and the transceiver 2020 through internal connection paths. The memory 2030 is configured to store instructions, and the processor 2010 may execute the instructions stored in the memory 2030.

It should be understood that the apparatus 2000 may be specifically the transmit end or the receive end in the foregoing embodiments, or may be a chip or a chip system. Correspondingly, the transceiver 2020 may be a transceiver circuit of the chip. This is not limited herein. Specifically, the apparatus 2000 may be configured to perform the steps and/or the procedures corresponding to the transmit end or the receive end in the foregoing method embodiments.

Optionally, the memory 2030 may include a read-only memory and a random access memory, and provide instructions and data to the processor. A part of the memory may further include a non-volatile random access memory. For example, the memory may further store information about a device type. The processor 2010 may be configured to execute the instructions stored in the memory. When the processor 2010 executes the instructions stored in the memory, the processor 2010 is configured to perform steps and/or procedures in the method embodiments corresponding to the transmit end or the receive end.

FIG. 11 is a diagram of a structure of still another communication apparatus according to an embodiment of this application. As shown in FIG. 11, the communication apparatus 3000 includes a processor 3010 and an interface circuit 3020. The processor 3010 and the interface circuit 3020 are coupled to each other. It may be understood that the interface circuit 3020 may be a transceiver or an input/output interface. Optionally, the communication apparatus 3000 may further include a memory 3030, configured to store instructions executed by the processor 3010, store input data required by the processor 3010 to run the instructions, or store data generated after the processor 3010 runs the instructions.

When the communication apparatus 3000 is configured to implement the foregoing method embodiments, the processor 3010 is configured to perform a function of the processing unit 1020, and the interface circuit 3020 is configured to perform a function of the transceiver unit 1010.

When the communication apparatus is a chip used in a terminal device, the chip implements a function of the terminal device in the foregoing method embodiment. The chip receives information from another module (for example, a radio frequency module or an antenna) in the terminal device. The information is sent by another network element to the terminal device; or the chip sends information to another module (for example, a radio frequency module or an antenna) in the terminal device. The information is sent by the terminal device to another network element.

In addition, an embodiment of this application further provides a communication apparatus. The apparatus includes at least one processor and at least one memory. The at least one processor is coupled to the at least one memory, and the at least one processor is configured to execute a computer program or instructions stored in the at least one memory, so that the communication apparatus performs the methods in the foregoing method embodiments.

In an implementation process, steps in the foregoing methods can be implemented by using a hardware integrated logical circuit in the processor, or by using instructions in the form of software. The steps of the methods disclosed with reference to embodiments of this application may be directly executed and completed by a hardware processor, or may be executed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in the form of software. The processor may be a general-purpose processor, a digital signal processor, an application-specific integrated circuit, a field programmable gate array or another programmable logic device, a discrete gate or transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps of the methods disclosed with reference to embodiments of this application may be directly executed and completed by a hardware decoding processor, or may be executed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not for limitation, many forms of RAMs are available, for example, a static random access memory, a dynamic random access memory, a synchronous dynamic random access memory, a double data rate synchronous dynamic random access memory, an enhanced synchronous dynamic random access memory, a synchlink dynamic random access memory, and a direct rambus random access memory. It should be noted that the memory of the systems and methods described in this specification includes but is not limited to these and any memory of another proper type.

An embodiment of this application further provides a computer-readable storage medium. The computer-readable storage medium stores computer instructions used for implementing the methods performed by the terminal device and the network device in the foregoing method embodiments.

An embodiment of this application further provides a computer program product, including computer program code or instructions. When the computer program code or the instructions are run on a computer, the computer is caused to implement the methods performed by the terminal device and the network device in the foregoing method embodiments.

For explanations and beneficial effects of related content of any one of the apparatuses provided above, refer to the corresponding method embodiments provided above. Details are not described herein again.

For ease of understanding the foregoing embodiments provided in this application, the following descriptions are provided.
(1) In this application, unless otherwise stated or if there is a logic conflict, terms and/or descriptions in different embodiments are consistent and may be mutually referenced, and technical features in different embodiments may be combined into a new embodiment based on an internal logical relationship thereof.
(2) In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" usually indicates an "or" relationship between associated objects. "At least one of the following items (pieces)" or a similar expression thereof means any combination of these items, including a singular item (piece) or any combination of plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are used for distinguishing between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case and do not limit time, and the device is not required to perform a determining action during implementation. This does not mean that there is another limitation.
(5) In this application, "communication" may also be described as "data transmission", "information transmission", "data processing", or the like. "Transmission" includes "sending" and "receiving".

It may be clearly understood by a person skilled in the art that, for the purpose of convenient and brief description, for a detailed working process of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, the part contributing to the conventional technology, or a part of the technical solutions may be implemented in a form of a software product. The computer software product is stored in a storage medium, and includes several instructions for enabling a computer device (which may be a personal computer, a server, a network device, or the like) to perform all or some of the steps of the methods described in embodiments of this application. The foregoing storage medium includes any medium that can store program code, for example, a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource configuration method, comprising:
receiving first configuration information, wherein the first configuration information indicates at least one of candidates of a target resource, the candidates of the target resource comprise a first candidate resource and a second candidate resource, a type of the first candidate resource comprises a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot; and
using the target resource to transmit a physical uplink control channel PUCCH.

2. The method according to claim 1, wherein a type of the second candidate resource comprises a third type and/or a fourth type, and a maximum payload size carried on the second candidate resource of the third type is different from a maximum payload size carried on the second candidate resource of the fourth type.

3. The method according to claim 2, wherein when the first configuration information does not indicate the first candidate resource, the target resource is the second candidate resource.

4. The method according to any one of claims 1 to 3, wherein when a slot of the target resource is in the SBFD slot, and at least one resource indicated by the first configuration information comprises the first candidate resource, the target resource is the first candidate resource; or
when a slot of the target resource is in the SBFD slot, at least one resource indicated by the first configuration information does not comprise the first candidate resource, and the at least one resource indicated by the first configuration information comprises the second candidate resource, the target resource is the second candidate resource.

5. The method according to any one of claims 1 to 4, wherein the maximum payload size carried on the first candidate resource of the first type is different from the maximum payload size carried on the second candidate resource of the third type.

6. The method according to any one of claims 1 to 5, wherein the first configuration information specifically comprises a configuration of the second candidate resource and frequency domain offset information, and the frequency domain offset information indicates a frequency domain offset of the first candidate resource relative to the second candidate resource.

7. The method according to claim 6, wherein the frequency domain offset is configured for a specific cell;
the frequency domain offset is configured for a specific carrier; or
the frequency domain offset is configured for a specific bandwidth part BWP.

8. The method according to claim 6 or 7, wherein the PUCCH comprises a plurality of candidate formats, and different candidate formats correspond to different frequency domain offsets.

9. A resource configuration method, comprising:
sending first configuration information, wherein the first configuration information indicates at least one of candidates of a target resource, the candidates of the target resource comprise a first candidate resource and a second candidate resource, a type of the first candidate resource comprises a first type and/or a second type, a maximum payload size carried on the first candidate resource of the first type is different from a maximum payload size carried on the first candidate resource of the second type, the first candidate resource is a resource dedicated to a subband full-duplex SBFD slot, and the second candidate resource is capable of being used in the SBFD slot and a non-SBFD slot; and
receiving a physical uplink control channel PUCCH on the target resource.

10. The method according to claim 9, wherein a type of the second candidate resource comprises a third type and/or a fourth type, and a maximum payload size carried on the second candidate resource of the third type is different from a maximum payload size carried on the second candidate resource of the fourth type.

11. The method according to claim 10, wherein when the first configuration information does not indicate the first candidate resource, the target resource is the second candidate resource.

12. The method according to any one of claims 9 to 11, wherein when a slot of the target resource is in the SBFD slot, and at least one resource indicated by the first configuration information comprises the first candidate resource, the target resource is the first candidate resource; or
when a slot of the target resource is in the SBFD slot, at least one resource indicated by the first configuration information does not comprise the first candidate resource, and the at least one resource indicated by the first configuration information comprises the second candidate resource, the target resource is the second candidate resource.

13. The method according to any one of claims 9 to 12, wherein the maximum payload size carried on the first candidate resource of the first type is different from the maximum payload size carried on the second candidate resource of the third type.

14. The method according to any one of claims 9 to 13, wherein the first configuration information specifically comprises a configuration of the second candidate resource and frequency domain offset information, and the frequency domain offset information indicates a frequency domain offset of the first candidate resource relative to the second candidate resource.

15. The method according to claim 14, wherein the frequency domain offset is configured for a specific cell;
the frequency domain offset is configured for a specific carrier; or
the frequency domain offset is configured for a specific bandwidth part BWP.

16. The method according to claim 14 or 15, wherein the PUCCH comprises a plurality of candidate formats, and different candidate formats correspond to different frequency domain offsets.

17. A communication apparatus, comprising a processor, wherein the processor is coupled to a memory, and the processor is configured to execute computer program instructions stored in the memory, to cause the apparatus to perform the method according to any one of claims 1 to 8, or cause the apparatus to perform the method according to any one of claims 9 to 16.

18. A communication system, comprising a network device and a terminal device, wherein the network device is configured to perform the method according to any one of claims 1 to 8, and the terminal device is configured to perform the method according to any one of claims 9 to 16.

19. A computer-readable storage medium, wherein the computer-readable storage medium stores computer program instructions, and when the computer program instructions are run on a computer, the computer is caused to perform the method according to any one of claims 1 to 8, or the computer is caused to perform the method according to any one of claims 9 to 16.

20. A chip or a chip system, comprising a processor, configured to invoke a computer program from a memory and run the computer program, to cause a communication device on which the chip system is installed to perform the method according to any one of claims 1 to 16.

21. A computer program product, wherein when the computer program product is run on a computer, the computer is caused to perform the method according to any one of claims 1 to 16.
